## Europäisches Patentamt
## European Patent Office
## Office européen des brevets

(11) Publication number: **0 137 748**
**B1**

# EUROPEAN PATENT SPECIFICATION

(45) Date of publication of patent specification: **13.04.88**

(51) Int. Cl.⁴: **A 01 K 97/04**

(21) Application number: **84306264.7**

(22) Date of filing: **13.09.84**

(54) **Artificial fish baits with sustained release properties.**

(30) Priority: **26.09.83 US 535491**

(43) Date of publication of application:
**17.04.85 Bulletin 85/16**

(45) Publication of the grant of the patent:
**13.04.88 Bulletin 88/15**

(84) Designated Contracting States:
**FR GB IT**

(56) References cited:
**DE-A-2 146 129**
**DE-U-7 026 261**
**FR-A-1 132 353**

**CHEMICAL ABSTRACTS vol. 94, no. 8, 23 February 1981, Columbus, Ohio, USA; "Nalidixic acid for treatment of fish infections"; page 375, abstract no. 52975g & JP-B-8034131 (DAIICHI SEIYAKU CO. LTD.) 04-09-1980**

**CHEMICAL ABSTRACTS vol. 81, no. 8, 26 August 1974, Columbus, Ohio, USA; INOUE et al. "Poly(vinyl alcohol) gel", page 44, abstract no. 38397v & JP-A-7330463 (KURARAY CO., LTD.) 20-09-1973**

(73) Proprietor: **THE DOW CHEMICAL COMPANY 2030 Dow Center Abbott Road P.O. Box 1967 Midland, MI 48640 (US)**

(72) Inventor: **Wolford, Troy D.**
**2901 Ronan Apt. No. 1**
**Midland Michigan 48640 (US)**
Inventor: **Greminger, George K. Jr.**
**802 West Larkin**
**Midland Michigan 48640 (US)**

(74) Representative: **Burford, Anthony Frederick et al**
**W.H. Beck, Greener & Co. 7 Stone Buildings Lincoln's Inn**
**London WC2A 3SZ (GB)**

Courier Press, Leamington Spa, England.

## Description

This invention relates to artificial baits for fish and other aquatic animals, more particularly to artificial baits which slowly release attractants for fish or other aquatic animals into the surrounding water upon use.

Most, if not all, techniques for catching fish or other water living animals such as shell fish, employ a bait or other attractant to which the desired species is attracted. Typically, said bait is of natural origin, i.e., animal or plant material. While such natural baits are widely used, largely because they are low in cost, such natural baits are quite inefficient in attracting the desired fish or other species. As a result, much of the natural bait used does not lead to the capture of the desired fish or other animal species.

Recently the availability of natural baits has decreased while the cost thereof has been increasing rapidly. The use of mechanical equipment for baiting hooks has created a need for a uniformly shaped bait form that is easily handled by the mechanical equipment used in commercial fishing operations. Natural baits also decompose rapidly and an artificial bait would provide convenience, storage stability, and would eliminate the problems of disposal of unused natural baits.

For this reason, in recent years there has been an effort to produce an artificial bait which is more effective in catching fish or other aquatic animals. For example, artificial lures made to resemble insects, small fish, shrimp or other natural prey of the species to be caught are widely used to catch certain types of fish. Such lures operate mainly by visually stimulating the target species. While such lures work very well for catching certain types of game fish, their use is not widely applicable to most major food fishes or for catching shellfish, crustaceans or other sea animals.

It has been found that for many species, including major food fishes, the most highly effective baits are those which are smelled by the animal to be caught. Accordingly, there have been developed sprays and other formulations which may be applied to natural or plastic baits in order to impart thereto a smell to which the fish is attracted. Unfortunately, however, these sprays and the like are not sufficiently long lasting for most applications, in particular commercial fishing, and tend to wash off the natural bait or other substrate to which they are applied.

It has previously been attempted (see US—A—4245420) to formulate the attractant into a solid matrix from which it is released during use. Unfortunately, such solid formulations generally employ a mixture of expensive natural gums which are difficult to obtain and very difficult to form into the desired shape. Furthermore, the physical properties of said gums, including their lack of thermoplasticity, renders said solid baits unsuitable in many applications, and difficult to use in any case. In addition, such baits employ nonwater soluble gums, which do not always release the attractant as readily as desired.

DE—A—2146129 (corresponding to US—A—3875302) discloses an artificial bait comprising an attractant in a gelled polyvinyl alcohol polymer. The bait is obtained by freezing below −5°C an aqueous solution of the polyvinyl alcohol polymer and the attractant and then melting the resultant frozen solution. The freezing temperature below −5°C is required in order to provide a structure in which water is retained inside micelles of highly oriented or crystallized polyvinyl alcohol, whereby high water resistant, elasticity and flexibility of the gel and satisfactory workability are obtained. The solution can contain, inter alia, a plasticizer.

Chemical Abstract 94: 52975g discloses the incorporation into fish bait of nalidixic acid and, as an excipient therefor, hydroxypropyl cellulose. The specified bait is fish flesh and there is no suggestion that the hydroxypropyl cellulose could constitute the mass of the bait.

It would, therefore, be highly desirable to provide a solid artificial bait from which an olfactory stimulant for the fish is slowly released upon immersion of the bait in water. In would be further desirable to provide artificial bait in a variety of physical forms, which bait is adaptable to catch many species of fish or other aquatic animals, as well as to provide diverse modes of catching said species.

The present invention is an artificial bait for fish or other water-living animal, which bait is capable of the prolonged and regular release of an attractant for said fish or water-living animal into surrounding water. This artificial bait comprises (a) a polymeric material comprising a water-soluble cellulose ether and/or polyvinyl alcohol and a plasticizer therefore, said polymeric material having dispersed therein (b) an attractant for fish or other water living animal which attractant is capable of being released in active form from said polymeric material upon contacting the artificial bait with water.

According to the present invention, there is provided a sustained release anhydrous artificial bait for aquatic animals comprising a polymeric mass and dispersed therein an attractant for said animals, characterized in that, said polymeric mass comprises a water-soluble cellulose ether and/or polyvinyl alcohol; and a plasticizer therefor, said polymer mass forming, when immersed in water, a hydrated gel-like layer on the wetted surface of the bait, which hydrated layer slowly erodes over a period of time.

The artificial baits of this invention are particularly suitable for the sustained and prolonged release of the fish attractant into surrounding water. In addition, the artificial bait of this invention may be employed in a variety of forms which are suitable for all forms of fishing such as sport fishing, commercial fishing, ocean fishing and fresh water fishing, as well as for catching shell fish and crustaceans such as lobsters, crabs, shrimp and the like.

The artificial bait of this invention can be of any convenient size or shape. For some applications the artificial bait may be in the form of a strip which can be attached to the hook, line, net, trap or other device being employed. Said strip may have any dimensions consistent with the requirements of its intended use. In general, however, said strips will have a minimum thickness of 1/16 inch (1.6 mm) and more typically will be from 3/32 inch to 1/2 inch (2.4 to 12.7 mm) thick.

The baits of this invention can also be formed into a tubular shape which is adapted, for example, to cover the shank of a fishhook. The dimensions of said tubular bait, in particular, the inside and outside diameter thereof, are chosen to provide the required physical strength, size and attractant release profile. The inside diameter is typically such that when the bait is pulled over the barb of a fishhook, it will remain on the shank of the fishhook during use. The outside diameter of the tubular bait is chosen to provide the bait with sufficient thickness to provide adequate strength as well as good release properties. Typically, the tubular bait has a thickness of between 1/16 inch and 3/8 inch (1.6 to 9.5 mm).

The bait of the invention can be, if desired, formed into the shape of a worm, insect, small fish, shellfish or other natural prey of the target species, as well as comprise a segment of such a shaped bait or lure. Long cylindrical "worm" shapes of 1/8 inch to 3/4 inch (3.2 to 19 mm) diameter are particularly popular among sports fishermen. For commercial fishing, cylindrical "ropes" of 1/4 inch to 1 inch (6.3 to 25 mm) in diameter are suitable.

For baiting lobster traps and the like, the bait is advantageously simply contained in a small open can or other container.

It will be readily recognized that the artifical bait of this invention may be formed into many desirable shapes and forms for which those particularly described herein are only illustrations.

The polymeric material employed herein is a normally solid material containing a water-soluble cellulose ether or polyvinyl alcohol, which is capable of slowly releasing a fish attractant into an aqueous medium. The polymeric material, when immersed in water, forms a hydrated gel-like layer on the wetted surface, which hydrated layer slowly erodes over a period of time.

The formation of such hydrated layer helps to retard the wetting of the interior portions of the artificial bait thereby slowing the release of the fish attractant contained therein. The hydrated layer also permits the fish attractant in said artificial bait to diffuse slowly out into the surrounding water.

For the preparation of shaped artificial baits, it is also preferable to employ a polymeric material which is capable of being extruded into the desired shape at temperatures which are sufficiently low that the fish attractant coextruded therewith is not degraded or inactivated. Many of said fish attractants comprise amino acids, enzymes or proteins which are not stable at elevated temperatures. Accordingly, the polymeric material is preferably one which can be coextruded with the fish attractant at a temperature generally from 75°C to 120°C.

Water-soluble cellulose ethers suitably employed herein include methylcellulose, hydroxypropylmethylcellulose, ethylhydroxyethylcellulose, hydroxypropylcellulose, hydroxyethylcellulose, carboxymethylcellulose, and the like. Of these, hydroxypropylmethylcellulose is preferred due to its thermoplasticity and superior ability to sustain the release of the fish attractant.

The molecular weight of the aforementioned cellulose ether may vary widely as long as the resultant artificial bait is solid and sustains release of the fish attractant therefrom over the required period. In some applications, such as sport fishing, the artificial bait is generally in use for a relatively short period, i.e., 15 minutes to two hours. Accordingly, the release of attractant is most advantageously sustained over a similar period. In other applications, a longer period of use is typically encountered. For example, commercial fishing generally requires a bait which can release attractant over a 2 to 20, more typically a 6 to 15, hour period. Lobster baits ideally exhibit a useful life of 3 to 5 days. Since the molecular weight of the polymer impacts upon the useful life of the bait, in general it is preferred to use the high molecular weight polymer in applications where a longer useful life is required. Cellulose ethers exhibiting a viscosity as a 2 weight percent aqueous solution of 100 to 100,000, preferably 1,000 to 100,000 centipoise (0.1 to 100, preferably 1 to 100 Pa's) at 20°C are suitably employed in this invention. However, for those baits requiring a longer useful life, the more viscous materials, i.e., those having a 2 percent solution viscosity of 15,000 centipoise (15 Pa's) or higher are preferred.

In addition to increasing the useful life of the artificial bait, increasing the molecular weight of the cellulose ether generally improves the toughness or elasticity of the bait. Thus, when toughness is a desired characteristic of the bait, as when the bait is to be pierced by a fish hook, the use of high molecular weight cellulose ether is preferred.

Cellulose ethers employed herein are advantageously temporarily cross-linked with glyoxal or other dialdehyde. Such cross-linked cellulose ethers often exhibit, in bait form, improved strength and toughness as compared to the corresponding non-cross-linked cellulose ethers.

The polymeric material employed herein also comprises a plasticizer for the cellulose ether. Such plasticizer is a material which is compatible with the polyvinyl alcohol or cellulose ether and which (a) reduces the softening point of the cellulose ether and/or (b) imparts more desirable physical properties (i.e., flexibility and toughness) to the polymeric material. Plasticizers for cellulose ether, particularly for hydroxypropylmethylcellulose, are well known and include materials such as ethylene glycol, propylene glycol, 1,2-butylene glycol, 2,3-butylene glycol, diverse diols such as 1,3-propanediol, 2,3-pentanediol, low molecular weight polyethylene glycols, (especially those which boil at less than about 500°C), diverse glycol ethers, esters of fatty acids and the like. The plasticizer is employed in an amount sufficient to impart to the polymeric material the desired physical properties and, typically, comprises from 0 to 80, preferably 40 to 80, percent by weight of the polymeric material.

Preferred plasticizers are those in which the cellulose ether or polyvinyl alcohol become miscible at temperatures between 95°C to 120°C. However, plasticizers in which the cellulose ether or polyvinyl alcohol only become miscible at somewhat higher temperatures, i.e., 150°C can be employed herein if the artificial bait is prepared in a stepwise process. In said stepwise process, the plasticizer and cellulose ether or polyvinyl alcohol are first blended at the higher temperature and then cooled to a temperature below 120°C at which the blended material remains soft or semisolid. The attractant is then added to the softened material in a separate step. Glycerol acetate is an example of a plasticizer which can be employed in such a stepwise fashion.

In an especially preferred embodiment of this invention, which is particularly useful in shaped baits which are to be attached to fish hooks, the polymeric material comprises a cellulose ether having a hydroxypropoxyl content of 7 to 32 weight percent and a methoxyl content of 16 to 30 weight percent, which is plasticized with 60 to 80 weight percent (based on polymer plus plasticizer) of propylene glycol or ethylene glycol. In such embodiments, hydroxypropylmethylcellulose having a hydroxypropoxyl content of 23 to 32 percent and a methoxyl content of 16 to 20 percent is particularly preferred. Such especially preferred polymeric material exhibits an excellent attractant release profile, has a texture which closely resembles that of conventional natural and artificial shaped baits and is sufficiently tough to permit it to be impaled on a fish hook during use.

The attractant employed herein is any sensory stimulant for the target species which is capable of being incorporated into the polymeric material and being released in active form therefrom. Preferred attractants include olfactory stimulants. Suitable such attractants include liquified fish or other marine products, fish oils, anise, amino acids or synthetic attractants.

Natural baits, such as squid, shrimp, bunker, or waste fishes or fish parts normally disposed of in fishing operations, such as fish heads, shrimp heads, carcasses, trash fish, trash invertebrates and the like may all be employed to prepare attractant mixtures.

In addition, attractants can be prepared following the procedure disclosed in Carr et al., *Comp. Biochem. Physiol.*, Vol. 54A, pp. 161—166; 437—441 (1976); Carr et al. *Comp. Biochem.* *Physiol.*, Vol. 55A, pp. 153—157 (1976) and Carr et al. *Comp. Biochem. Physiol.*, Vol. 58A, pp. 69—73 (1977).

Said attractant is employed in an amount which is compatible with the polymeric matrix and which provides the desired release properties. Generally, greater than 40 percent attractant, based on weight of polymeric material, causes the bait to have poor physical properties. Thus, for shaped baits where physical strength is an important parameter, it is generally desirable to employ less than 40 percent attractant. Preferably, 5 to 40, more preferably 5 to 20 percent by weight attractant are employed per 100 percent polymeric material in a shaped bait. In other bait forms such as lobster bait, where physical strength is not important, somewhat higher levels of attractant may be employed if desired. In general, however, the bait will not contain more than 50 percent of attractant per 100 percent of polymeric material.

In addition to the polymeric material and attractant, the baits of this invention may employ dyes, stabilizers, mold release agents and like additives for their conventional purposes.

One especially useful additive is salt (sodium chloride) or other electrolyte, which may, optionally, be employed in an amount from 0 to 15, preferably 0 to 5, percent of the combined weights of polymeric material and salt. The presence of said salt or other electrolyte often increases the rate of diffusion of water into the artificial bait, thereby increasing the rate of release of attractant from the artificial bait. In addition, said salt or electrolyte sometimes softens the artificial bait.

Similarly, inorganic or organic fillers such as tricalcium phosphates and aluminum sulfate may be incorporated into the bait. Said filler will typically have the effects of increasing the stiffness and strength of the bait, while also increasing the rate of release of attractant therefrom.

Fibrous filler, such as fiberglass fibers, cloth fibers, plastic fibers and the like can be employed to improve the physical strength of the bait, if desired.

The preparation of the artificial baits of this invention can vary somewhat according to the particular characteristics desired in the final product. In general, the artificial baits of this invention are prepared by forming a mixture, blend or solution of the polymeric material and the attractant and then forming mixture, blend or solution into a desired shape.

In the preparation of strips of artificial bait, the strip may be formed by coextruding the polymeric material and attractant into the desired shape, or forming a film of the polymeric material and attractant from a solution thereof. Suitable extrusion conditions are described hereinbelow. Film-forming can be achieved by dissolving the polymeric material and attractant into a suitable solvent such as water, methylenechloride, forming a film therefrom, and drying the film. Alternatively, the blended attractant and polymeric material may be formed into films as a solventless hot melt and subsequently cooled to obtain the desired bait film. In said film formation, the artificial bait is advantageously, but not necessarily, coated onto or laminated to a flexible substrate which is employed to add mechanical strength to the strip. Said substrate is advantageously a woven material such as cloth, particularly gauze, or a plastic material, but may be any material which provides the desired mechanical properties to the bait.

Preparation of shaped baits (i.e., worms, insects, hollow baits and the like) is advantageously performed by an extrusion technique. In said technique, the polymeric material and attractant are thoroughly mixed and melted in an extruder and then molded or otherwise formed into the desired shape. Said extrusion technique is preferably conducted relatively quickly and at relatively low temperatures because of the tendency of the fish attractant to become degraded or inactivated at elevated temperatures. In general, said extrusion is performed at less than 120°C, preferably less than 110°C, more preferably between 75°C to 110°C, for a period of less than 10, preferably less than 5, more preferably less than 3, minutes.

As is evident from the foregoing, various parameters may be manipulated to obtain the desired release profile. The amount of cellulose ether employed can be varied somewhat, with release rates generally increasing as the cellulose ether content decreases. The optional inclusion of salt, electrolyte or filler also affects the release rate. Similarly, increasing the level of attractant also generally increases the rate of release. Alterations of the size and shape of the bait also can affect the release of attractants therefrom.

In addition, the rate of release can be altered by incorporating varying levels of attractant in the exterior and interior regions of the artificial bait. In general, the attractant at the exterior position of the bait is released more quickly than that of the interior positions. Accordingly, a fast release can be obtained by concentrating the attractant at the exterior portions of the bait. Conversely, a delayed release is obtained by placing the major amount of attractant on the interior of the bait.

A bait having the attractant concentrated at its exterior portions is advantageously prepared by extruding the polymeric material, with or without attractant, and before cooling the extruded polymeric material, contacting the surface thereof with the attractant, such that only the exterior portions of the polymeric material absorb the attractant. Alternatively, the bait can be prepared by forming the interior of the bait in a first step and then, in a second step, coating the interior of the bait with additional polymeric material containing attractant.

Conversely, baits having the principal portion of attractant on the interior portions are advantageously prepared by first forming an interior portion containing a major amount of attractant, and then coating said interior portions with additional polymeric material containing little or no attractant.

The artificial bait of this invention is employed in the same manner as natural baits or conventional artificial baits. This artificial bait may be employed to bait fish hooks, fish or shellfish nets, lobster or other traps, or in any other suitable means for catching a desired species. The artificial baits of this invention are useful for catching fish or other aquatic animal species indigenous to fresh or salt water.

In the following examples, all parts and percentages are by weight unless otherwise indicated.

### Example 1

A slurry containing 101.25 g of propylene glycol, 33.75 g of hydroxypropylmethylcellulose (methoxyl content = 16.5—20 percent; hydroxypropoxyl content = 23—32 percent; 2 percent solution viscosity = 5,000 centipoise (5 Pa's)) and 15 g of fish attractant (a mixture of amino acids stabilized with ascorbic acid) is prepared by simple mixing. The slurry is then fed into an extruder containing four heat zones and set at 100°, 110°, 110° and 85°C, respectively. The total residence time of the slurry in the extruder is less than 3 minutes. The slurry is extruded into "ropes" of 3/16 inch (4.8 mm) diameter and varying lengths. The extruded product is clear and has a solid, but limp appearance. In addition, the product exhibited a noticeable odor of fish attractant.

The resulting product is found to be stable at room temperature and sufficiently strong to withstand axial penetration by a fish hook without tearing or breaking.

The effectiveness of this artificial bait is tested by immersing a portion thereof into tanks containing diverse fish species, including grouper and flounder. In all tests, the fish are strongly attracted to the artificial bait.

### Example 2

Example 1 is repeated, this time employing the same fish attractant except that it is stabilized with potassium sorbate. Equivalent results are obtained.

### Example 3

Example 1 is again repeated, this time employing a hydroxypropylmethylcellulose which is lightly cross-linked with glyoxal. The resulting product turns black upon extrusion, apparently due to an interaction between the attractant and the glyoxal cross-links. However, this product is tougher than that of Example 1, is stable, and exhibits equally good ability to attract fish.

### Example 4

Example 1 is again repeated, this time employing, in addition to the other ingredients, 3 g of 1/8 inch (3.2 mm) long polyester fibers. The mixture extruded well, providing a product worm- shaped bait with higher tensile strength than that of Examples 1—5.

### Example 5

A slurry containing 67.5 percent propylene glycol, 22.5 percent hydroxypropylmethylcellulose (as described in Example 1) and 10 percent fish attractant (as described in Example 1) is prepared by thoroughly blending the components. The mixture is fed into a 2½ inch (63.5 mm) extruder equipped with a mandrill to extrude a product in tubular form. The extruder contained three melting zones operated at 110°C, as well as two dies operated at 115°C and 93°C, respectively. The tubing, thus prepared, had an outside diameter of 5/32 inch (4.0 mm), and inside diameter of 3/32 inch (2.4 mm) and a weight of 266 g/ft (0.873 g/mm).

Two three-inch (76 mm) portions of the tubing are cut. Into each of these tube portions is inserted a fish hook so that the shank of the hook is encased in the tubing. The coated hooks are then attached to an open wing stirrer and rotated in a 32 ounce (0.95 liter) jar of water at 10—12 rpm. The submerged tubing lasted 3 hours before dissolving.

### Claims

1. A sustained release anhydrous artificial bait for aquatic animals comprising a polymeric mass and dispersed therein an attractant for said animals, characterized in that, said polymeric mass comprises a water-soluble cellulose ether and/or polyvinyl alcohol; and a plasticizer therefor, said polymer mass forming, when immersed in water, a hydrated gel-like layer on the wetted surface of the bait, which hydrated layer slowly erodes over a period of time.

2. An artificial bait as claimed in Claim 1, which has been formed by extrusion.

3. An artificial bait as claimed in Claim 1 or Claim 2, wherein the cellulose ether is hydroxypropylmethylcellulose.

4. An artificial bait as claimed in Claim 3, wherein the hydroxypropylmethylcellulose has a hydroxypropyl content of 7—32 percent by weight and a methoxyl content of 16—30 percent by weight.

5. An artificial bait as claimed in Claim 4, wherein the hydroxypropylmethylcellulose has a methoxyl content of 16.5—20 percent and a hydroxypropoxyl content of 23—32 percent.

6. An artificial bait as claimed in any one of Claims 3 to 5, wherein the plasticizer is ethylene glycol or propylene glycol.

7. An artificial bait as claimed in any one of the preceding claims, wherein the polymeric mass comprises a cellulose ether temporarily cross-linked with glyoxal or other dialdehyde.

8. An artificial bait as claimed in any one of the preceding claims, wherein the fish attractant comprises from 2 to 20 weight percent of said artificial bait.

9. An artificial bait as claimed in any one of the preceding claims, wherein plasticizer comprises from 40 to 80 weight percent of the combined weight of plasticizer and cellulose ether and/or polyvinyl alcohol.

10. An artificial bait as claimed in any one of the preceding claims, further comprising a flexible substrate.

11. An artificial bait as claimed in any one of the preceding claims, which is in the form of a hollow tube.

12. An artificial bait as claimed in any one of the preceding claims, which further comprises a fibrous filler and is in the shape of an elongate cylinder.

### Patentansprüche

1. Verzögert freigesetzter, wasserfreier, künstlicher Köder für Wassertiere, enthaltend eine Polymermasse und darin dispergiert ein Lockmittel für diese Tiere, dadurch gekennzeichnet, daß die Polymermasse einen wasserlöslichen Celluloseether und/oder Polyvinylalkohol und einen Weichmacher dafür enthält, wobei die Polymermasse bei Eintauchen in Wasser eine wasserhaltige, gelartige Schicht auf der feuchten Oberfläche des Köders ausbildet und die wasserhaltige Schicht sich mit der Zeit auswäscht.

2. Künstlicher Köder nach Anspruch 1, dadurch gekennzeichnet, daß er durch Extrusion hergestellt ist.

3. Künstlicher Köder nach Anspruch 1 oder 2, dadurch gekennzeichnet, daß der Celluloseether Hydroxypropylmethylcellulose ist.

4. Künstlicher Köder nach Anspruch 3, dadurch gekennzeichnet, daß die Hydroxypropylmethylcellulose einen Hydroxypropylgehalt von 7—32 Gew.-% und einen Methoxylgehalt von 16—30 Gew.-% aufweist.

5. Künstlicher Köder nach Anspruch 4, dadurch gekennzeichnet, daß die Hydroxypropylmethylcellulose einen Methoxylgehalt von 16,5—20% und einen Hydroxypropoxylgehalt von 23—32% aufweist.

6. Künstlicher Köder nach jedem der vorstehenden Ansprüche 3—5, dadurch gekennzeichnet, daß der Weichmacher Ethylenglycol oder Propylenglycol ist.

7. Künstlicher Köder nach jedem der vorstehenden Ansprüche, dadurch gekennzeichnet, daß die Polymermasse einen Celluloseether enthält, der vorübergehend mit Glyoxal oder Dialdehyd vernetzt ist.

8. Künstlicher Köder nach jedem der vorstehenden Ansprüche, dadurch gekennzeichnet, daß das Lockmittel für Fische 2—20 Gew.-% des künstlichen Köders enthält.

9. Künstlicher Köder nach jedem der vorstehenden Ansprüche, dadurch gekennzeichnet, daß der Weichmacher von 40—80 Gew.-% des kombinierten Gewichtes von Weichmacher und Celluloseether und/oder Polyvinylalkohol enthält.

10. Künstlicher Köder nach jedem der vorstehenden Ansprüche, dadurch gekennzeichnet, daß er zusätzlich ein flexibles Trägermaterial enthält.

11. Künstlicher Köder nach jedem der vorstehenden Ansprüche, dadurch gekennzeichnet, daß er die Form eines hohlen Rohres aufweist.

12. Künstlicher Köder nach jedem der vorstehenden Ansprüche, dadurch gekennzeichnet, daß er zusätzlich einen faserigen Füller enthält und die Form eines langgestreckten Zylinders aufweist.

**Revendications**

1. Appât artificiel anhydre à effet entretenu, pour les animaux aquatiques, comprenant une masse polymère et, dispersé dans celle-ci, un agent attractif pour lesdits animaux, caractérisé en ce que ladite masse polymère comprend un éther de cellulose et/ou un poly(alcool vinylique) soluble dans l'eau; et un plastifiant pour ceux-ci, ladite masse polymère formant, lorsqu'elle est immergée dans l'eau, une couche de type gel hydraté sur la surface mouillée de l'appât, cette couche hydratée étant lentement rongée pendant un certain laps de temps.

2. Appât artificiel selon la revendication 1, qui a été formé par extrusion.

3. Appât artificiel selon la revendication 1 ou 2, dans lequel l'éther de cellulose est l'hydroxypropyl-méthylcellulose.

4. Appât artificiel selon la revendication 3, dans lequel l'hydroxypropyl-méthylcellulose possède une teneur en groupe hydroxypropyle de 7 à 32 pour-cent en poids et une teneur en groupe méthoxyle de 16 à 30 pour-cent en poids.

5. Appât artificiel selon la revendication 4, dans lequel l'hydroxypropyl-méthylcellulose possède une teneur en groupe méthoxyle de 16,5 à 20 pour-cent et une teneur en groupe hydroxy-propoxyle de 23 à 32 pour-cent.

6. Appât artificiel selon l'une quelconque des revendications 3 à 5, dans lequel le plastifiant est l'éthylèneglycol ou le propylèneglycol.

7. Appât artificiel selon l'une quelconque des revendications précédentes, dans lequel la masse polymère comprend un éther de cellulose temporairement réticulé avec le glyoxal ou un autre dialdéhyde.

8. Appât artificiel selon l'une quelconque des revendications précédentes, dans lequel l'agent attractif pour les poissons comprend de 2 à 20 pour-cent en poids dudit appât artificiel.

9. Appât artificiel selon l'une quelconque des revendications précédentes, dans lequel le plastifiant comprend de 40 à 80 pour-cent en poids du poids combiné du plastifiant et de l'éther de cellulose et/ou du poly(alcool vinylique).

10. Appât artificiel selon l'une quelconque des revendications précédentes, qui comprend en outre un substrat souple.

11. Appât artificiel selon l'une quelconque des revendications précédentes, qui se présente sous la forme d'un tube creux.

12. Appât artificiel selon l'une quelconque des revendications précédentes, qui comprend en outre une charge fibreuse et qui se présente sous la forme d'un cylindre allongé.